# EUROPEAN PATENT SPECIFICATION

(11) **EP 0 755 729 B1**
(45) Date of publication and mention of the grant of the patent: **18.10.2000**
(21) Application number: 96111499.8
(22) Date of filing: 17.07.1996
(51) Int. Cl.: B09B 3/00, B29B 17/00

(54) **Process and plant for manufacturing of products by recovering waste materials having high specific weight, in particular ballast counterweights for washing machines and the like, and product obtained therefrom**
Verfahren und Anlage zur Herstellung von Gegenständen durch Rückgewinnung von Abfallstoffen mit hohem spezifischem Gewicht, insbesondere Ballastgegengewichte für Waschmaschinen und dergleichen, und daraus hergestelltes Produkt
Procédé et installation pour la production de produits par récupération de déchets de poids spécifique élevé, particulièrement des contrepoids pour des machines à laver et similaires, et produit ainsi obtenu

(30) Priority: 28.07.1995 IT PN950040; 18.10.1995 IT PN950053
(43) Date of publication of application: 29.01.1997
(73) Proprietor: Techline Services and Engineering S.A., 6900 Lugano (CH)
(72) Inventor: Panontin, Mario, 31040 Meduna di Livenza (TV) (IT); Bertoglio, Mario, 44100 Ferrara (IT)
(74) Representative: Dalla Rosa, Adriano

(56) References cited:
- EP-A- 0 383 227
- EP-A- 0 626 216
- WO-A-94/20232
- FR-A- 2 563 212

## Description

The invention relates to a process for manufacturing of products of various kind by recovering waste materials having high specific weight, like the rolled sand obtained as foundry processing remainder, said materials being adequately treated thereby obtaining products which are used as ballast counterweights or tubs integral with the ballast counterweights for washing machines.

The invention also relates to a plant utilized for exploiting this process and a product obtained by means of the manufacturing process referred to.

From EP-A-626216 is known a method for working up waste materials for obtaining products, by utilizing a mixture of waste materials, residual materials and filler materials of various kind, as well as plastic materials, which are broken into small particles, and by employing a processing machine provided with molds into which such mixture is moulded in a conventional manner so as to obtain compact products with different percentages of the single components of such mixture.

The present invention has the object to provide for a process and manufacturing plants for manufacturing products in accordance with claims 1, 12 and 16 respectively by utilizing a mixture of waste materials and plastic materials as disclosed by EP-A-626216, which process however involves the use of additional materials and is performed in a manner different than the process disclosed by EP-A-626216, in order to obtain products made also in a manner different than those disclosed by EP-A-626216.

Preferred embodiments are defined in the dependent claims 2-11, 13-15 and 17 respectively.

The invention will be understood better from the following desciption, given solely by way of not-limiting scope, and with reference to the accompanying drawings wherein :
- Fig. 1 schematically shows a manufacturing plant of products in accordance to the invention, in a first embodiment thereof ;
- Fig. 2 shows a front view of a kind of product attainable with the manufacturing plant and process in accordance to the invention ;
- Fig. 3 schematically shows a product manufacturing plant in accordance to the invention, in a second embodiment thereof ;
- Fig. 4 shows an enlarged and cutaway front view of a contructive item of the plant of Fig. 3 ;
- Figs. 5 and 6 show a cutaway front view of a product attainable by employing the manufacturing process and plant in accordance to the invention, and in two different embodiments thereof.

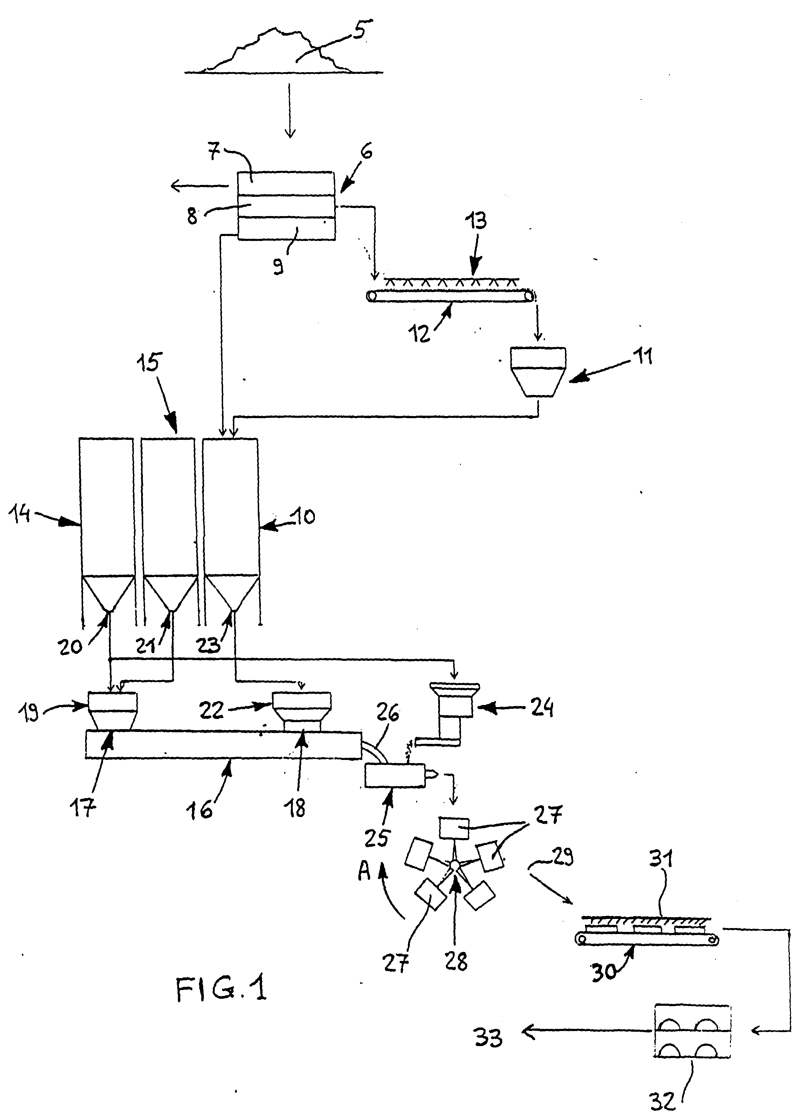

In the Fig. 1 is represented schematically a manufacturing plant of products of various kind, in a first embodiment thereof, by utilizing waste materials having high specific weight which have been recovered and in particular rolled sand originated from foundry processings.

As products which can be obtained with the present plant there may be cited by way of example only the ballast counterweights, which can be applied on the washing machine tubs, in order to dampen the oscillations of the respective washing tub-drum unit generated during the rotation of such drum at the different washing and centrifugation speeds in the washing cycles of the machines referred to.

Likewise, additional products which can be manufactured may be sound insulating panels and panels of different kind, which can be installed in buildings, or containers of various kind.

As evident from the Fig. 1, the cited waste materials are marked with the reference numeral 5 and may be utilized separately or also with different combinations thereof with other separate materials which have been rejected after their use, as for instance solid household wastes.

To this purpose, the product manufacturing process foresees befor all a first step in which the described waste materials are drawn from the collecting sites thereof and riddled on at least a riddle 6 of the present plant, for separating the fine grained particles from the particles with larger sizes of grains, in order to obtain waste materials with grains of established size which may be processed as it will be described on conventional processing machines, without causing internal damages therein.

In the example referred to, the riddle 6 is provided advantageously for separating the waste material particles with grains having a size greater than 300 microns from the particles with smaller size, comprised from 300 to 100 microns, and of a size smaller than this latter size.

To this purpose, such a riddle is subdivided into at least three separates zones, marked with the reference numerals 7, 8 and 9, in which there are respectively collected particles with grains having a size greater than 300 microns, which cannot be used in manufacturing products in accordance to the present invention, and therefore are rejected, as well as particles with grains having a size comprised from 300 to 100 microns and particles with grains having a size smaller than 100 microns, which are employed for manufacturing of these products. In this way, the particles with grains having a size smaller than 100 microns, which are collected in the riddle zone 9, are introduced from this latter into at least a specific containing storage bin 10 having adequate volume, where they remain in order to be subsequently utilized in the manner hereinafter described.

In turn, the particles with grains having a size comprised from 300 to 100 microns, which are collected in the riddle zone 8, are transferred toward a milling or crushing appliance 11 of conventional type, for reducing the grains thereof to a size smaller than 100 microns, after having laid and transferred the same particles onto belt conveyors 12 or per se known transport means, which provide for conveying such particles through a drying area formed preferably by a drying tunnel 13 heated with infrared radiation, into which these particles are adequately dried prior to arrive on the milling or crushing appliance 11.

Thereafter, the milled or crushed particles are transferred from this latter appliance to the containing storage bin 10 and mixed with the particles introduced from the riddle zone 9 therein.

The present plant also comprises at least two further containing storage bins 14 and 15, separated from the preceding bin 10 and assigned to collect respectively some wasted plastic materials, performing the function of coating materials, and some elastomeric materials like the rubber performing the function of binding materials.

In particular, as coating materials there are utilized preferably but not exclusively the following materials : PELD (low density polyethylene), PELLD (linear low density polyethylene), PEHD (high density polyethylene), PP homo (homopolymer polypropylene), PP copo (copolymer polypropylene), said materials being commonly found by recovering and re-using sanitary towels and napkins, which are constituted by the same materials adequately mixed together at suitable ratios thereof. Obviously, these materials may be also found by recovering and re-using other kind of wastes too such as for example the plastic bottles, wastes from processings of plastic materials etc..., and may be also used separately or at suitable combinations to each other, and also may be constituted by low density plastic materials of other kind, which during the subsequent processing operations thereof always tend to arrange themselves on the surface of masses of different materials, which are mixed and processed with the same processing machines. Likewise, these materials could be formed also by the correspondent not yet processed raw plastic materials, however in such a case by involving cost burdens greater than those resulting from the use of wasted plastic materials.The use of these waste materials and plastic materials for manufacturing products is known from EP-A-626 216, and forms the preamble of claim 1.

Furthermore, there can be used as binding materials preferably but not exclusively EPM waste rubber (ethylenpropylen monomer rubber) and EPDM waste rubber (ethylenpropylen diene monomer rubber), and/or wasted plastic materials from polymezation processes (the so-called wastes from polymer washing tub), and/or vitreous materials and/or per se known fillers of different kind. Also in this case, these materials could be constituted by the correspondent not yet processed raw materials, by involving however greater cost burdens.

It is to point out that it is suitable to mill or crush in advance the coating materials and the binding materials which have been employed, which are introduced subsequently in the respective containing storage bins 14 and 15 and utilized as it will be described later.

In the next second product manufacturing step in accordance to the present process the materials collected into the three storage bins 10, 14 and 15 are introduced into and processed with the criteria as described hereinafter, at least a separate processing machine such as an extruder 16.

The introduction of these materials into the extruder 16 is effected at at least two different loading positions along the extruder, respectively a first position 17 situated on the starting zone of the same extruder, in which the materials contained into the storage bins 14 and 15 are introduced, and a second position 18 situated near the outlet end portion of said extruder, in which the materials contained into the storage bin 10 are introduced.

In order to be able to introduce batched quantities of materials into the extruder 16, there are foreseen a first gravimetric batching plant 19 which communicates with the outlet mouths 20 and 21 of the respective storage bins 14 and 15 and the first loading position 17 of said extruder, and a second gravimetric batching plant 22 which communicates with the outlet mouth 23 of the storage bin 10 and the second loading position 18 of said extruder,

The present manufacturing plant also comprises a third gravimetric batching plant 24 which communicates with the outlet mouth 20 of the storage bin 14 containing said coating materials and at least a low pressure operated plastic material injector 25, of conventional type, in turn communicating through a conduit 26 with the outlet end portion of the extruder 16 too. The extruder 16 is of a type with two screws and operates at a low heating temperature (max 180°C), which progressively increases up to such maximal value from the first to the second loading position 17, 18 of said extruder, with a very gentle temperature rise gradient, and a very slow screw rotation speed (not greater than 30 rpm/min.), as well as also a pressure raising from said first to said second loading position, reaching a maximal value of 800 MPa.

The second manufacturing step of the present process is performed by introducing contemporaneously on the extruder first loading position 17 the coating materials, contained in the storage bin 14, as well as the binding materials contained in the storage bin 15, at quantities batched through the gravimetric batching plant 19, and on the extruder second loading position 18 the waste materials contained into the storage bin 10, at quantities batched through the gravimetric batching plant 22.

Moreover, the coating materials are contemporaneously introduced on the injector 25 too, at quantities batched through the gravimetric batching plant 24.

The cited materials may, by way of example only, be introduced on the extruder 16 with the following ratios :

87% rolled sand, 7% coating materials (densified materials) composed of PELD, PELLD, PEHD, PP homo and PP copo, and 6% binding material particularly EPM rubber and EPDM rubber, but of course these ratios may be also changed, however by keeping always high the ratio of waste materials which give a remarkable weight to the finished products, thus without departing from the protection sphere of the present invention. Then, on this manufacturing step, when the extruder is operating a progressive heating and feeding is produced of the compound composed of coating materials and binding materials, which have been introduced into the same extruder at the first loading position 17 thereof, in which condition the different component materials of such compound, which have a low melting temperature, are gradually softened and mixed homogeneously to each other up to the melting thereof, and in which the coating materials, having smaller density than the binding materials, distribute themselves almost prevalently on the outer surface of this molten compound. Afterwards, the rotation of the screws of the extruder 16 determines a progressive feeding of such molten compound up to the second extruder loading position 18, in which it comes into contact with the waste materials coming from the storage bin 10, by mixing therewith in a manner to include homogeneously them thanks to the binding properties of such compound due to the presence of said binding materials, thereby avoiding the need to melt also these waste materials which, in the case of metallic rolled sand, would require too high heating temperatures which aren't compatible with the extruder referred to.

In the course of this process step, the heating temperature of the extruder 16 is maintained almost at the same maximal value attained previously (namely of about 180°C).

The mixture molten compound-waste materials is then conveyed by the extruder 16 up to the injector 25, by passing through the conduit 26, where it is further mixed with the coating material coming from the storage bin 14, which thanks to its density smaller than that of such mixture, on the next moulding step of the finished products distributes itself almost prevalently on the outer surface of the same mixture, due to the electrostatic effect, thereby forming a thin coating layer. In the following third manufacturing step of the present process, it is performed the injection moulding operation or other suitable forming operations of the mixture molten compound-waste materials, by introducing such mixture from the injector 25 into a set of appropriate molds 27 for forming the respective finished products, which molds are advantageously assembled on a mold carrying turntable 28 rotating in the rotation direction A, in a way that such molds with the associated moulded products are moved in succession through an extraction station 29, provided with handling robots (not shown) adapted to draw selectively the different finished products from the correspondent molds, by conveying and lodging them onto a conveyer 30 passing through a cooling tunnel 31 of conventional kind, where such products are rapidly cooled from the moulding temperature of about 160-170°C to the temperature of about 50°C.

Finally, such finished products are adequately transferred by the handling robots on cages 32, where they are conveyed toward the seasoning warehouse 33, for the subsequent delivery to the customers thereof.

Thus, there appear evident the advantages attainable with the product manufacturing process and plant in accordance to the present invention, consisting in recovering and re-using effectively metallic waste materials such as rolled sand, which are cheap and have very high specific weight, and including homogeneously these waste materials inside some compounds of the kind described as above, which circumstance permits the same to be effectively moulded into processing machines, with contemporaneous coating of the outer surface of these products with coating layers by utilizing the same materials of compounds, and which also allows these products to be used under unfavourable operative conditions too, as in the case of counterweights for washing machine tubs, thereby without determining undesired disjunctions of the different employed materials which usually aren't compatible thereamong.

Besides, these products lend themselves effectively also to be additionally machined, for example bored for the introduction of per se known fasteners therein, which are adapted to permit them to be applied on the respective installation position thereof, thanks to the compact and rugged structure of the materials forming them, and re-milled for being subsequently machined for obtaining different products.

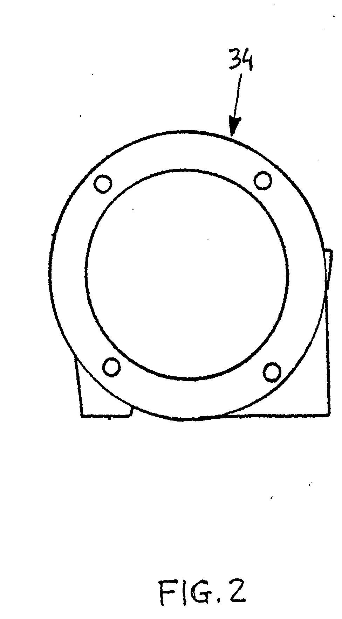

Furthermore, in the Fig. 2 it is made evident by way of example only a counterweight 34 applicable on the tubs of clothes washing machines, which is made with the manufacturing process and plant in accordance to the present invention.

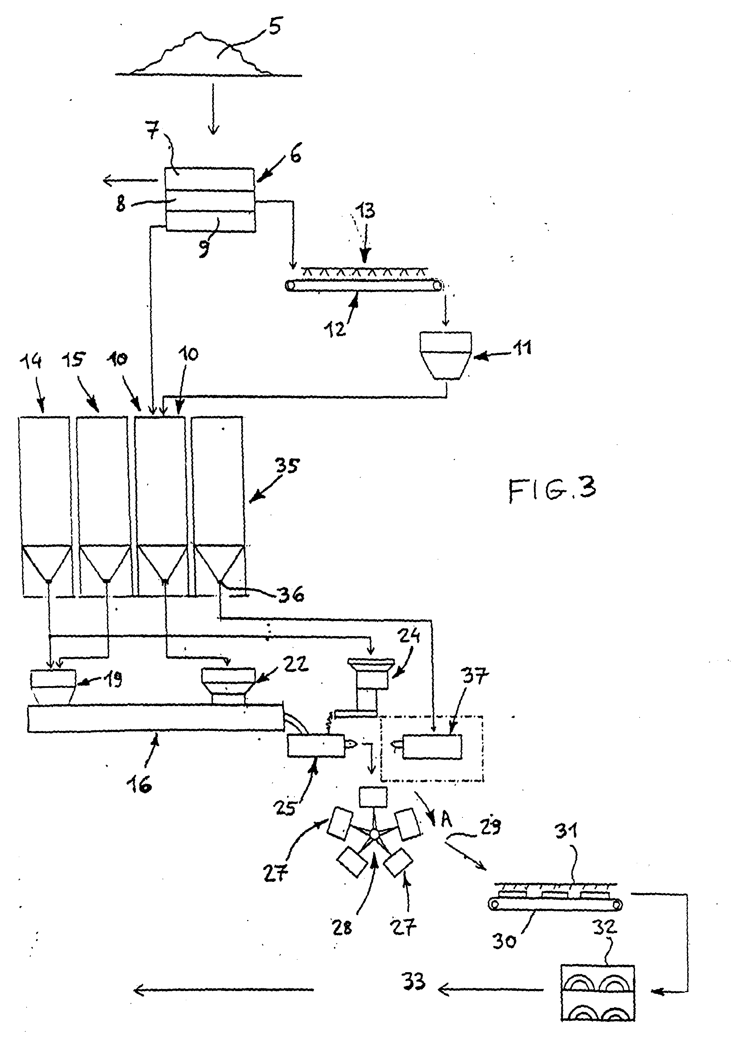

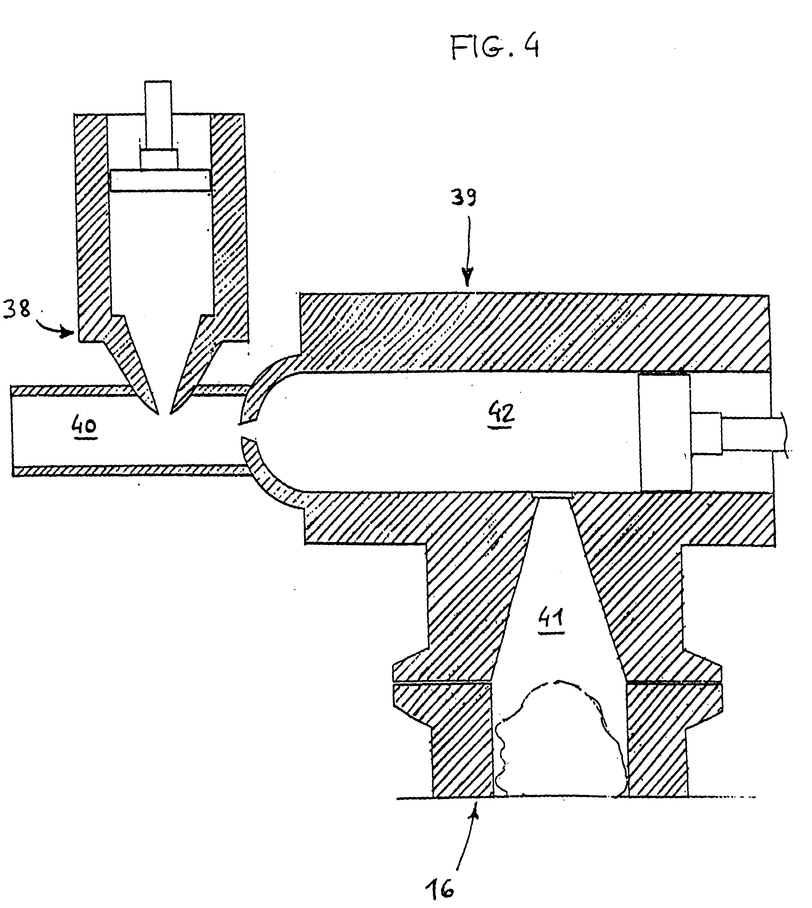

By referring now to the Figs. 3 and 4, shown therein is a plant according to a further embodiment, having improved features with respect to the preceding plant, which will be described hereinafter, for obtaining for example washing machine tubs. Therefore, also in this case there are shown the cited waste materials to be recovered, marked with the reference numeral 5, as well as the riddle 6 for separating the waste materials on particles with grains having greater sizes, which are collected in the riddle zone 7 and then rejected, and fine grained particles which are collected on the respective riddle zones 8 and 9 and introduced in the underlying containing storage bin 10.

The plant also comprises the two containing storage bins 14 and 15 for the coating materials and binding materials, of the type and for the scopes described previously, as well as an extruder 16 with two screws, communicating with the storage bins through a first and a second volumetric batching plant 19 and 22, for the introduction inside such an extruder respectively of the coating materials and binding materials from the correspondent storage bins 14 and 15 and the waste materials from the storage bin 10.

In turn, the extruder 16 is, as usual, communicating with the low-pressure plastic material injector 25, which in turn communicates through the third gravimetric batching plant 24 with the storage bin 14 containing the coating materials.

Finally, the plant referred to also comprises the set of molds 27 for forming the finished products, which are assembled onto the rotating mold carrying turntable 28 and communicating with the subsequent extraction station 29, the cooling tunnel 31, the cages or support devices 32 and the seasoning warehouse 33 for the finished product storage.

Unlike the previously described plant, the present plant also comprises at least an additional containing storage bin 35, separated from the preceding storage bins 10, 14 and 15 and assigned to hold the plastic material used for manufacturing each washing tub or container, which to this aim is constituted by any one resin of conventional type, either of virgin type or originated from recovery and regeneration thereof, for example from homopolymer or copolymer polypropylene, which advantageously is filled and/or modified with inert fillers and/or fiber glasses or materials of per se known kind, and adequately coloured and stabilized at heat, light, detergents and surface-active agents employed on the washing liquors of household clothes and dish washing machines. The use of these plastic materials and fillers and/or fiber glasses for manufacturing products is known from EP-A-626 216, and forms the preamble of claim 1.

Such additional storage bin 35 is also shaped with a proper volume, so as to contain the plastic material, advantageously with reduced grains, at quantities sufficient to manufacture different set of tubs or containers, and is provided with a lower outlet mouth 36 which communicates with another low pressure plastic material injector 37, which is separated and approached to the preceding injector 25, as well as situated in correspondence of the rotating mold carrying turntable 28, in a way to be into communication with the different molds 27 thereof.

Advantageously, as it is evident from the Fig. 4, the heads 38 and 39 of the respective injectors 25 and 37 are assembled together, with the end portion of the extruder 16, therefore by forming a compact injection unit, by arranging the head 38 of the extruder 25 on a position approached to and oriented almost orthogonally in front of the head 39 of the injector 37, in such a way that both are communicating with at least a common sprue channel 40 directed toward the respective molds 27 of said mold carrying turntable 28, and also by arranging the end portion of the extruder 16 oriented orthogonally with respect to the another injector 37, in such a way that the respective inner chambers 41 and 42 of such component parts are communicating directly to each other.

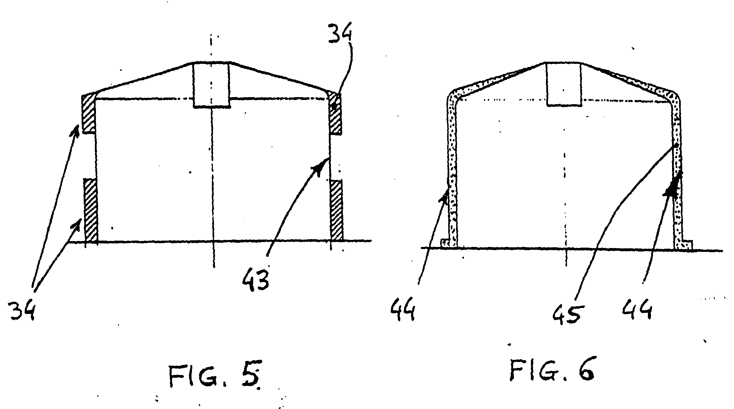

In turn, such molds 27 may be made in two different manners, respectively a first manner in which there are provided on the mold carrying turntable 28 two different and separated molds for each product to be manufactured, namely a first mold for manufacturing of the washing tub on a container, and a second mold for manufacturing of the ballast counterweight for such tub or container, whose size is greater than that of the first mold, so as to be able to be matched around this latter, in order that such counterweight is injected over and around the tub or container, and a second manner in which it is provided a single mold for each product to be manufactured on the mold carrying turntable 28, in which mold both the tub and the ballast counterweight are injected as described later. In the Fig. 5 it is now described a washing tub or container obtained in accordance to said first manufacturing manner, which foresees the use of two separate molds (not shown) which can be arranged on the mold carrying turntable 28 on the same station, at a positon approached to each other, or on two different stations at a position moved away from each other.

The present process foresees that the manufacture of the washing tub (or container) be effected with two different operative steps, which are consecutive to each other, in the first of which the tub (or container 43) is made and in the second of which the ballast counterweight 34 is made by injection moulding of the relative material over and around the tub. The first moulding step is performed by firstly driving the mold carrying turntable 28 in rotation in the direction A, in a way that a station thereof with the associated mold for forming the tub (or container) positiones itself near both the injectors 25 and 37, and thereafter by injection moulding into the inner cavity of such mold of the filled and molten plastic material contained exclusively in the injector 37, thereby by manufacturing such tub (or container).

Afterwards, at the end of moulding operation of such tub (or container), the mold carrying turntable 28 is driven in rotation again in the direction A, so as to bring the tub (or container) gradually back toward the moulding position thereof, thereby permitting an effective cooling during this displacement movement thereof, and to move also progressively each station with the associated mold which are directly following in correspondence of both the injectors 25 and 37, for moulding with this latter injector of correspondent tubs (or containers), followed by a cooling step of each tub (or container) which has been respectively moulded with the same described manners.

In the second moulding step, in which each moulded and partially cooled tub (or container) is positioned again in correspondence of the injectors 25 and 37, such tub (or container) is extracted firstly from the associated mold, which therefore can be utilized again for subsequent moulding operations with the same criteria, by means of the employ of a specific handling robot (not shown), and then conveyed by the same in correspondence of the station of the mold carrying turntable 28, in which the second mold for forming of the ballast counterweight is situated, and finally it is introduced by said robot inside said second mold for performing the moulding operation of the ballast counterweight.

This molding operation is performed by injection moulding of the mixture molten compound-waste materials, which is composed as described previously, and contained into the injector 25, from this latter in the mold inner cavity defined between the same mold and the outer surface of the tub (or container), thereby obtaining the iniection moulding operation of the ballast counterweight over such tub (or container), whose outer surface is coated by a thin coating layer again, which is formed by the coating material coming from the storage bin 14 and introduced inside the injector 25 by means of batching through the third batching plant 24 thereof.

Thereafter, at the end of such moulding operation, the mold carrying turntable 28 is driven in rotation in the direction A, with consequent cooling of such tub (or container) integral with the counterweight during this displacement movement, up to the associated moulding station of said turntable arrives in correspondence of the plant extraction station 33, in which a further handling robot (not shown) is foreseen for extracting said tub (or container) from its mold, arranging it onto a conveyer 30 passing through the cooling tunnel 31, where this finished product is cooled from the moulding temperature of about 160-170°C to the temperature of about 50°C.

Finally, such finished product is transferred by said handling robot on the cages or support devices 32, which provide for conveying it toward the seasoning and storage warehouse 33 for being subsequently delivered to the customers.

In the Fig. 6 it is now shown a washing tub or container 43 made in accordance to said second manufacturing manner, by providing the use of a single mold (not indicated) which is arranged on the mold carrying turntable 28 on the station acting as moulding station for both the tub (or container) and the ballast counterweight.

In this case, the process according to the invention foresees that the manufacture of the tub (or container) integral with the counterweight is effected with a single operative step, in which there are manufactured contemporaneously and directly both the tub (or container) and the ballast counterweight. To this purpose, the single employed mold is designed with such size and form as to permit a different distribution of the employed moulding materials in the inner cavity thereof, which materials namely are formed by the filled and molten plastic material contained in the injector 37 and the mixture molten compound-waste materals contained in the injector 25, by exploiting the different density of such materials. This moulding step is performed by driving firstly the mold carrying turntable 28 in rotation in the direction A, so as the moulding station thereof with the associated mold positions itself near both the injectors 25 and 37, and then by injection moulding into the inner cavity of such mold contemporaneously of both said filled and molten plastic material and said mixture molten compound-waste materials, in which circumstance such materials distribute themselves in a different manner inside such inner cavity, because of the different density thereof, thereby obtaining an almost complete and homogeneous distribution of the filled plastic material toward the finished product outer surface, so as to define the outer wall 44 of the tub (or container), and the mixture compound-waste materials toward the finished product inner surface, so as to define the inner wall 45 of the tub (or container) acting as ballast counterweight for the finished product.

Then, at the end of moulding operation, the mold carrying turntable 28 is driven in rotation in the direction A, with consequent cooling of such tub (or container) integral with the counterweight during this displacement movement, until the associated moulding station of this turntable arrives in correspondence of the plant extraction station 29, in which said integral tub is let cooling down and stored with the same operations as described with reference to the Fig. 5.

Therefore, the manufacturing process and plant in accordance to the invention permit to manufacture of tubs or containers with a reduced numbers of operative steps, which are fully automatized, for being machined and assembled, so as to simplify and rationalize the manufacture thereof, and also permit to recover and re-use again the metallic waste materials such as the rolled sand, which are cheap and have a very high specific weight.

In addition, in the case in which the materials described in the Fig. 5 are employed for manufacturing of the tubs (or containers), these materials provide for reducing considerably the noise of the washing machines onto which there are mounted, as well as for improving the insulation of the same tubs with respect to the conventional ones, with consequent reduction of the electric consumptions during heating of the washing water introduced into such tubs.

## Claims

1. Process for manufacturing of products by utilizing recovered waste materials having high specific weight, by utilizing particularly rolled sand as foundry processing remainders, solid household wastes and the like, and plastic coating materials, which are milled or crushed, said waste materials being mixed with said plastic coating materials at high temperatures into a processing machine such as at least an extruder (16) with two screws, characterized in that to utilize also milled or crushed binding materials in combination with said waste materials and said plastic coating materials; in that it comprises a first step in which said waste materials are riddled in advance, by separating them on fine grained particles which are then processed, and particles with grains having greater sizes, which are rejected, and in which said fine grained particles are then collected for being subsequently utilized, a second step in which said waste materials are introduced, together with said milled coating materials and binding materials, into said processing machine (16) at such positions as to determine firstly a homogeneous compound of said coating materials and said binding materials, with progressively increasing heating temperatures up to a pre-established maximal value, of about 180° C, in which the melting of such compound occurs, and then the mixing of said molten compound with said waste materials, with consequent inclusion of these latter in the same molten compound, with heating temperatures having almost the same maximal value thereof, and in which said coating materials distribute themselves almost prevalently on the outer surface of said mixture molten compound-waste materials; and a third step in which said mixture is introduced inside molds (27) for forming the products and subsequently cooled.

2. Process for manufacturing of products according to claim 1, characterized in that said coating materials comprise waste plastic materials, of the type PELD (low density polyethylene), PELLD (linear low density polyethylene), PEHD (high density polyethylene), PP homo (homopolymer polypropylene), PP copo (copolymer polypropylene) and/or also low density plastic materials of other kind.

3. Process for manufacturing of products according to claim 1, characterized in that said binding materials comprise waste elastomeric materials, rubbers of the type EPM (ethylenpropylen monomer rubbers) and EPDM (ethylenpropylen diene monomer rubbers) and/or wasted plastic materials from polimeryzation processes (the so-called wastes from polymer washing tub), and/or vitreous materials and/or per se known fillers of different kind.

4. Process according to the preceding claims, characterized in that said coating materials and said binding materials are introduced at a first loading position (17) of said processing machine (16), situated on the starting zone thereof with lower heating temperature.

5. Process according to the preceding claims, characterized in that said waste materials are introduced at a second loading position (18) of said processing machine (1), situated near the outlet end portion thereof, in which is maximal the heating temperature.

6. Process according to the preceding claims, characterized in that said coating materials are also added to said mixture molten compound-waste materials, on a position situated downstream said processing machine (16).

7. Process according to the preceding claims, characterized in that the product forming occurs at a temperature of about 160-170°C.

8. Process according to the preceding claims, characterized in that the cooling of the formed products occurs at a temperature of about 50°C.

9. Process for manufacturing of washing tubs for washing machines, or containers of different kind, with at least a ballast counterweight, according to the preceding claims, characterized in that to utilize at least a per se known additional plastic material, filled with fillers of per se known kind too, and that said additional plastic material is introduced at the molten state thereof inside said molds (27), and mixed separately or contemporaneously with said mixture molten compound-waste materials, by becoming integral therewith.

10. Process according to claim 9, characterized in that said additional plastic material is mixed separately with said mixture molten compound-waste materials by means of the employ of a first and a second mold, respectively provided for forming said tub or container (43) and said ballast counterweight (34), and in that said mixing is effected by introducing firstly said additional molten plastic material inside said first mold, thereby obtaining said tub or container (43), with subsequent cooling thereof, then by extracting said tub or container (43) from said first mold and introducing it into said second mold, and finally by introducing inside this latter said mixture molten compound-waste materials, which in this way is injection moulded over said tub or container (43), with subsequent cooling thereof.

11. Process according to claim 10, characterized in that said additional plastic material is mixed contemporaneously with said mixture molten compound-waste materials by means of the employ of a single mold, provided for forming both said tub or container (43) and said ballast counterweight (34), and in that said mixing is effected by introducing contemporaneously said additional plastic material and said mixture inside said single mold, which in turn is made with such a size and form as to permit a different distribution of said additional plastic material and said mixture in the inner cavity thereof, in a way that said plastic material distributes itself toward the finished product outer surface, thereby defining the outer wall (44) of the tub or container (43), and that said mixture distributes itself toward the finished product inner surface, thereby defining the inner wall (45) of the tub or container (43), acting as ballast counterweight.

12. Product manufacturing plant for the manufacture process according to claims 1-11, provided with riddle means (6) for separating said waste materials on fine grained particles having a size comprised from 300 to 100 microns, and particles having smaller value which are then utilized, and particles having greater size which are then rejected; containing means (10, 14, 15) for collecting selectively said waste materials, said coating materials and said binding materials; and injection means, wherein said containing means (10, 14, 15) are communicating with said processing machine (16) through respective first and second gravimetric batching means (19, 22) for introducing pre-established batched quantities of the respective materials in the same machine, as well as with said injection means (25), and from these latter being also communicating with said containing means (14) through third gravimetric batching means (24) as well as with said molds (27), said first and second gravimetric batching means (19, 22) being provided respectively at a first and a second loading position (17, 18) of said processing machine (16), in correspondence of lower and greater heating temperatures thereof, and said molds (27) being made preferably as a rotating turntable (28), for conveying the products formed inside said molds (27) in succession through cooling means (31) of the temperature of the formed product.

13. Plant according to claim 12, comprising further injection means (37) for introducing said additional plastic material into said molds (27), wherein said further injection means is communicating with additional containing means (35) containing said additional plastic material.

14. Plant according to claim 13, wherein said molds (27) comprise a first and a second mold, respectively provided for forming a tub or container (43) and a ballast counterweight (34), wherein said molten additional plastic material is introduced in advance inside said first mold, for forming of said tub or container (43), with subsequent cooling thereof, and inside said second mold it is introduced firstly said tub or container (43), extracted from said first mold, and thereafter said mixture of molten compound and waste materials for forming of said ballast counterweight (34), which is subsequently cooled.

15. Plant according to claim 13, characterized in that said molds (27) comprise a single mold, for forming contemporaneously of both said tub or container (43) and said ballast counterweight (34), said single mold being made with such a size and form as to permit a different distribution inside it of said molten additional plastic material and said mixture, which are introduced contemporaneously therein, in a way that said additional plastic material distributes itself toward the product outer surface, thereby defining the outer wall (44) of said tub or container, and said mixture distributes itself toward the product inner surface, thereby defining the inner wall (45) of said tub or container (43) acting as ballast counterweight.

16. Product obtained by the process and plant according to claims 1-15, being a counterweight (34) for a washing machine tub, or a sound insulating panel formed by a mixing of milled or crushed recovered waste materials having high specific weight, coating plastic materials and binding materials, wherein said waste materials are included into a compound of said coating materials and said binding materials and wherein said coating materials are further distributed almost prevalently on the outer surface of the mixture waste materials - compound of coating materials and binding materials.

17. Product obtained by the process and plant according to claim 16, being a washing tub (43) for washing machine, integral with said counterweight (34) and formed either by an additional plastic material used for manufacturing said tub (43), on which said mixture is injection moulded, or by said mixture coated by said additional plastic material.

## Patentansprüche

1. Verfahren zur Herstellung von Gegenständen unter Verwendung von rückgewonnenen Abfallstoffen mit hohem spezifischem Gewicht, insbesondere unter Verwendung von Sand aus Gießereibetriebsresten, festen Haushaltabfällen und dergleichen sowie Kunststoffbeschichtungsstoffen, die gemahlen oder gebrochen sind, wobei die Abfallstoffe mit den Kunststoffbeschichtungsstoffen bei hohen Temperaturen in einer Verarbeitungsmaschine wie wenigstens einem Extruder (16) mit zwei Schnecken gemischt werden,
**dadurch gekennzeichnet,**
daß auch gemahlene oder gebrochene Bindestoffe in Kombination mit den Abfallstoffen und den Kunststoffbeschichtungsstoffen verwendet werden, daß in einem ersten Schritt die Abfallstoffe zunächst gesiebt werden, um sie in feine körnige Partikel, die dann verarbeitet werden, und in Partikel mit größeren Korngrößen zu trennen, die zurückbehalten werden, wobei die feinen körnigen Partikel dann zur anschließenden Verwendung gesammelt werden, daß in einem zweiten Schritt die Abfallstoffe zusammen mit den gemahlenen Beschichtungsstoffen und Bindestoffen in die Verarbeitungsmaschine (16) an solchen Stellen eingeführt werden, daß zuerst eine homogene Mischung aus den Beschichtungsstoffen und den Bindestoffen entsteht mit fortschreitend steigenden Heiztemperaturen bis zu einem vorbestimmten maximalen Wert von etwa 180° C, bei dem die Mischung schmilzt, mit anschließendem Vermischen der geschmolzenen Mischung mit den Abfallstoffen, wobei diese in die geschmolzene Mischung eingeschlossen werden, wobei die Heiztemperaturen im wesentlichen denselben maximalen Wert beibehalten, und wobei die Beschichtungsstoffe sich überwiegend an der Außenfläche des Gemischs aus geschmolzener Mischung und Abfallstoffen verteilen, und daß in einem dritten Schritt das Gemisch in Formen (27) eingeführt wird, um die Gegenstände auszubilden, und nachfolgend gekühlt wird.

2. Verfahren zur Herstellung von Gegenständen nach Anspruch 1,
dadurch gekennzeichnet, daß die Beschichtungsstoffe Kunststoffabfälle des Typs PELD (Polyethylen niedriger Dichte), PELLD (lineares Polyethylen niedriger Dichte), PEHD (Polyethylen hoher Dichte), PP homo (Homopolymerpolypropylen), PP copo (Copolymerpolypropylen) und/oder Kunststoffe niedriger Dichte einer anderen Art enthalten.

3. Verfahren zur Herstellung von Gegenständen nach Anspruch 1,
dadurch gekennzeichnet, daß die Bindestoffe Abfallelastomerstoffe enthalten, Gummi des Typs EPM (Ethylenpropylenmonomergummi) und EPDM (Ethylenpropylendienemonomergummi) und/oder Abfallkunststoffe aus Polimerisationsprozessen (die sogenannten Abfälle aus Polymerwaschtrögen) und/oder glasige Materialien und/oder bekannte Füllstoffe anderer Art.

4. Verfahren nach den vorhergehenden Ansprüchen,
dadurch gekennzeichnet, daß die Beschichtungsstoffe und die Bindestoffe an einer ersten Ladeposition (17) der Verarbeitungsmaschine (16) eingefüllt werden, die sich an der Startzone mit geringer Heiztemperatur befindet.

5. Verfahren nach den vorhergehenden Ansprüchen,
dadurch gekennzeichnet, daß die Abfallstoffe an einer zweiten Ladeposition (18) der Verarbeitungsmaschine (16) eingefüllt werden, die sich in der Nähe des Auslaßendabschnitts befindet, wo die Heiztemperatur ihr Maximum hat.

6. Verfahren nach den vorhergehenden Ansprüchen,
dadurch gekennzeichnet, daß die Beschichtungsstoffe dem Gemisch aus geschmolzener Mischung und Abfallstoffen an einer Stelle hinzugefügt werden, die sich stromabwärts der Verarbeitungsmaschine (16) befindet.

7. Verfahren nach den vorhergehenden Ansprüchen,
dadurch gekennzeichnet, daß die Ausbildung der Gegenstände bei einer Temperatur von etwa 160 bis 170° C erfolgt.

8. Verfahren nach den vorhergehenden Ansprüchen,
dadurch gekennzeichnet, daß das Abkühlen der geformten Gegenstände bei einer Temperatur von etwa 50° C erfolgt.

9. Verfahren zur Herstellung von Waschtrögen für Waschmaschinen oder von Behältern anderer Art mit wenigstens einem Ballast, gegengewicht nach den vorhergehenden Ansprüchen,
dadurch gekennzeichnet, daß wenigstens ein an sich bekanntes zusätzliches Kunststoffmaterial verwendet wird, gefüllt mit ebenfalls bekannten Füllstoffen, und daß das zusätzliche Kunststoffmaterial im geschmolzenem Zustand in die Formen (27) eingebracht und getrennt oder gleichzeitig mit dem Gemisch aus geschmolzener Mischung und Abfallstoffen vermischt wird, und damit integraler Bestandteil mit diesen wird.

10. Verfahren nach Anspruch 9,
dadurch gekennzeichnet, daß das zusätzliche Kunststoffmaterial getrennt mit dem Gemisch aus der geschmolzenen Mischung-Abfallstoffen unter Verwendung einer ersten und einer zweiten Form vermischt wird, die vorgesehen sind, um den Trog oder Behälter (43) und das Ballastgegengewicht (34) auszubilden, und daß das Vermischen dadurch bewerkstellig wird, daß zuerst das zusätzliche geschmolzene Kunststoffmaterial in die erste Form eingeführt wird, wodurch der Trog oder Behälter (43) erhalten wird, der anschließend gekühlt wird, wobei dann der Trog oder Behälter (43) aus der ersten Form entnommen und in die zweite Form eingebracht wird, und daß abschließend in die letztere Form das Gemisch aus geschmolzener Mischung-Abfallstoffen eingeführt wird, das auf diese Weise über den Trog oder Behälter (43) spritzgegossen und anschließend gekühlt wird.

11. Verfahren nach Anspruch 10,
dadurch gekennzeichnet, daß das zusätzliche Kunststoffmaterial gleichzeitig mit dem Gemisch aus geschmolzener Mischung-Abfallstoffen mit Hilfe einer einzigen Form vermischt wird, mit der sowohl der Trog oder Behälter (43) als auch das Ballastgegengewicht (34) ausgebildet werden, und daß das Vermischen durch gleichzeitiges Einführen des zusätzlichen Kunststoffmaterials und des Gemischs in die einzige Form bewerkstelligt wird, die eine solche Größe und Form hat, daß eine unterschiedliche Verteilung des zusätzlichen Kunststoffmaterials und des Gemischs in dem inneren Hohlraum in einer Weise möglich ist, daß das Kunststoffmaterial sich selbst über die Außenfläche des fertigen Gegenstandes verteilt, wodurch die Außenwand (44) des Troges oder Beälters (43) gebildet wird, und daß das Gemisch sich selbst zur Innenfläche des fertigen Gegenstandes verteilt, wodurch es die Innenwand (45) des Troges oder Behälters bildet und als Ballastgegengewicht wirkt.

12. Anlage zur Herstellung von Gegenständen nach dem Herstellungsverfahren der Ansprüche 1 bis 11, mit einer Siebeinrichtung (6) zum Trennen der Abfallstoffe in feine körnige Partikel mit einer Größe von 300 bis 100 mikron und kleineren Partikel, die dann verwendet werden, und in größere Partikel, die zurückbehalten werden, mit Aufnahmeeinrichtungen (10, 14, 15) zum getrennten Sammeln der Abfallstoffe, der Beschichtungsstoffe und der Bindestoffe, und einer Injektionseinrichtung,
wobei die Aufnahmeeinrichtungen (10, 14, 15) mit der Verarbeitungsmaschine (16) durch erste und zweite gravimetrische Chargeneinrichtungen (19, 22) verbunden sind, um vorbestimmte Chargenmengen der jeweiligen Stoffe in dieselbe Maschine einzuführen, und die Injektionseinrichtung (25) mit der Aufnahmeeinrichtung (14) über eine dritte gravimetrische Chargeneinrichtung (24) und mit den Formen (27) in Verbindung steht, wobei die erste und die zweite gravimetrische Chargeneinrichtung (19, 22) an einer ersten und einer zweiten Ladeposition (17, 18) der Verarbeitungsmaschine (16) vorgesehen sind mit einer niedrigeren und einer höheren Heiztemperatur und wobei die Formen vorzugsweise als Drehtisch (28) vorgesehen sind, um die in den Formen (27) ausgebildeten Gegenstände nacheinander durch eine Kühleinrichtung (31) mit der Temperatur des geformten Produkts zu fördern.

13. Anlage nach Anspruch 12, ferner enthaltend eine Injektionseinrichtung (37) zum Einführen des zusätzlichen Kunststoffmaterials in die Formen (27), wobei die weitere Injektionseinrichtung mit einer zusätzlichen Aufnahmeeinrichtung (35) in Verbindung steht, die das zusätzliche Kunststoffmaterial enthält.

14. Anlage nach Anspruch 13,
wobei die Formen (27) eine erste und eine zweite Form enthalten, die vorgesehen sind, um einen Trog oder Behälter (43) und ein Ballastgegengewicht (34) auszubilden, wobei das geschmolzene zusätzliche Kunststoffmaterial im voraus in die erste Form eingeführt wird, um den Trog oder Behälter (43) auszubilden, der anschließend gekühlt wird, und wobei zuerst der Trog oder Behälter (43) in die zweite Form eingesetzt wird, nachdem er aus der ersten Form entnommen wurde, woraufhin das Gemisch aus geschmolzener Mischung und Abfallstoffen zum Ausbilden des Ballastgegengewichtes (34) eingebracht wird, das nachfolgend gekühlt wird.

15. Anlage nach Anspruch 13,
dadurch gekennzeichnet, daß die Form (27) aus einer einzigen Form bestehen, um gleichzeitig den Trog oder Behälter (43) und das Ballastgegengewicht (34) auszubilden, wobei die einzige Form eine solche Größe und Form hat, daß eine unterschiedliche Verteilung des geschmolzenen zusätzlichen Kunststoffmaterials und des Gemischs in ihr erfolgen kann, die gleichzeitig eingefüllt werden, in einer Weise, daß das zusätzliche Kunststoffmaterial sich selbst über die Außenfläche des Gegenstandes verteilt und dadurch die Außenwand (44) des Troges oder Behälters bildet, und das Gemisch sich zu der Innenfläche des Gegenstandes verteilt und die Innenwand (45) des Troges oder Behälters (43) bildet und als Ballastgegengewicht wirkt.

16. Gegenstand, erhalten durch das Verfahren und die Anlage nach den Ansprüchen 1 bis 15, in Form eines Gegengewichtes (34) für einen Waschmaschlnenbehälter oder eine Lärmschutzplatte, ausgebildet durch ein Gemisch aus gemahlenen oder gebrochenen rückgewonnenen Abfallstoffen mit hohem spezifischen Gewicht, Kunststoffbeschichtungsstoffen und Bindestoffen, wobei die Abfallstoffe eingeschlossen sind in eine Mischung der Beschichtungsstoffe und Bindestoffe und wobei die Beschichtungsstoffe überwiegend an der Außenfläche des Gemischs aus Abfallstoffen und der Mischung aus Beschichtungsstoffen und Bindestoffen verteilt ist.

17. Gegenstand erhalten durch das Verfahren und die Anlage nach Anspruch 16, in Form eines Waschtroges (43) für eine Waschmaschine, der integral mit dem Gegengewicht (34) ausgebildet ist und entweder durch ein zusätzliches Kunststoffmaterial zur Herstellung des Troges (43) auf das das Gemisch spritzgeformt ist, oder durch das Gemisch gebildet ist, das mit dem zusätzlichen Kunststoffmaterial beschichtet ist.

## Revendications

1. Procédé de fabrication de produits par l'utilisation de matières résiduelles récupérées possédant un poids spécifique élevé, on utilisant en particulier du sable cylindré constituant un résidu de traitement de fonderie, des résidus ménagers solides et analogues, et de matières plastiques de revêtement., qui sont broyées ou écrasées, les matières résiduelles étant mélangées aux matières plastiques de revêtement à des températures élevées dans une machine de traitement, telle qu'au moins une extrudeuse (16) comportant deux vis, caractérisé en ce qu'il consiste à utiliser des matières de liaison, également broyées ou écrasées, en combinaison avec les matières résiduelles et les matières plastiques de revêtement ; en ce qu'il comporte une première opération suivant laquelle les matières résiduelles sont passées au crible à l'avance, en les séparant en particules à grain fin qui sont alors traitées, et en particule à grains présentant des tailles plus grandes, qui sont rejetés, et suivant laquelle les particules à grain fin sont alors recueillies afin d'être ensuite utilisées ; une deuxième opération suivant laquelle les matières résiduelles sont introduites, en même temps que les matières de revêtement et matières de liaison broyées, dans la machine de traitement (16) en des emplacements permettant de déterminer en premier lieu un produit composé homogène des matières de revêtement et des matières de liaison, avec des températures de chauffage augmentant progressivement jusqu'à une valeur maximale préétablie, d'environ 180 °C, à laquelle la fusion d'un tel produit composé a lieu, puis le mélange du produit composé fondu avec les matières résiduelles, avec l'inclusion résultante de ces dernières dans ce produit composé fondu, à des températures de chauffage de ceux-ci ayant presque la même valeur maximale, et suivant laquelle les matières de revêtement se répartissent d'une manière presque prédominante sur la surface extérieure du mélange produit composé fondu-matières résiduelles ; et une troisième opération suivant laquelle ledit mélange est introduit dans des moules (27) pour former les produits, puis est refroidi.

2. Procédé de fabrication de produits suivant la revendication 1, caractérisé en ce que les matières de revêtement comprennent des matières plastiques résiduelles, du type PELD (polyéthylène basse densité), PELLD (polyéthylène basse densité linéaire), PEHD (polyéthylène haute densité), homoPP (homopolymère de polypropylène), copoPP (copolymère de polypropylène) et/ou également matière plastique à basse densité d'un autre type.

3. Procédé de fabrication de produits suivant la revendication 1, caractérisé en ce que les matières de liaison comprennent des matières élastomères résiduelles, des caoutchoucs du type EPM (caoutchoucs éthylène-propylène monomère) et EPDM (caoutchoucs éthylène-propylène diène monomère) ct/ou des matières plastiques résiduelles provenant de procédés de polymérisation (ce qu'il est convenu d'appeler résidus de cuve de lavage polymère), et/ou des matières vitreuses et/ou des charges d'un type différent en elles-mêmes connues.

4. Procédé suivant les revendications précédentes, caractérisé en ce que les matières de revêtement et les matières de liaison sont introduites en un premier emplacement de chargement (17) de la machine de traitement (16), situé dans la zone initiale de celle-ci présentant une température de chauffage plus basse.

5. Procédé suivant les revendications précédentes, caractérisé en ce que les matières résiduelles sont introduites en un second emplacement de chargement (18) de la machine de traitement (1), situé près de la partie d'extrémité de sortie de celle-ci, auquel la température de chauffage est maximale.

6. Procédé suivant les revendications précédentes, caractérisé en ce que les matières de revêtement sont également ajoutées audit mélange produit composé fondu-matières résiduelles, en un emplacement situé en aval par rapport à la machine de traitement (16).

7. Procédé suivant les revendications précédentes, caractérisé en ce que le formage des produits a lieu à une température d'environ 160 - 170 °C.

8. Procédé suivant les revendications précédentes, caractérisé en ce que le refroidissement des produits formés a lieu à une température d'environ 50 °C.

9. Procédé de fabrication de cuves de lavage pour lave-linge, ou récipients d'un type différent, comportant au moins un contrepoids de lestage, suivant les revendications précédentes, caractérisé en ce qu'il consiste à utiliser au moins une matière plastique supplémentaire en elle-même connue, chargée de charges d'un type également en lui-même connu, et en ce que la matière plastique supplémentaire est introduite à l'état fondu de celle-ci dans les moules (27), et mélangée séparément ou simultanément au mélange produit composé fondu-matières résiduelles, en devenant d'un seul bloc avec celui-ci.

10. Procédé suivant la revendication 9, caractérisé en ce que la matière plastique supplémentaire est mélangée séparément au mélange produit composé fondu-matières résiduelles au moyen de l'utilisation d'un premier et un second moules, respectivement prévus pour former la cuve ou le récipient (43) et le contrepoids de lestage (34), et en ce que l'opération de mélange est effectuée en introduisant d'abord la matière plastique supplémentaire fondue dans le premier moule, ce qui permet d'obtenir la cuve ou le récipient (43), avec un refroidissement suivant de celle-ci ou celui-ci, puis en extrayant du premier moule la cuve ou le récipient (43) et en l'introduisant dans le second moule, et enfin en introduisant dans ce dernier le mélange produit composé fondu-matières résiduelles, lequel est de cette manière moulé par injection par-dessus la cuve ou le récipient (43), avec un refroidissement suivant de celle-ci ou celui-ci.

11. Procédé suivant la revendication 10, caractérisé en ce que la matière plastique supplémentaire est mélangée simultanément au mélange produit composé fondu-matières résiduelles au moyen de l'utilisation d'un moule unique, prévu pour former à la fois la cuve ou le récipient (43) et le contrepoids de lestage (34), et en ce que l'opération de mélange est effectuée en introduisant simultanément la matière plastique supplémentaire et ledit mélange dans le moule unique, lequel est lui-même réalisé avec une taille et une forme celles qu'il permet une répartition différente de la matière plastique supplémentaire et dudit mélange dans la cavité intérieure de celui-ci, d'une manière telle que la matière plastique se répartit vers la surface extérieure du produit fini, définissant ainsi la paroi extérieure (44) de la cuve ou du récipient (43), et en ce que ledit mélange se répartit vers la surface intérieure du produit fini, définissant ainsi la paroi intérieure (45) de la cuve ou du récipient (43), on servant de contrepoids de lestage.

12. Installation de fabrication de produits pour le procédé de fabrication suivant les revendications 1 - 11, pourvue de moyens de criblage (6) servant à séparer les matières résiduelles en particules à grain fin ayant une taille comprise entre 300 et 100 micromètres, et en particules ayant une valeur plus petite, qui sont alors utilisées, et particules ayant une taille plus grande qui sont alors rejetées ; des moyens formant contenant (10, 14, 15) servant à recueillir d'une manière sélective les matières résiduelles, les matières de revêtement et les matières de liaison ; et des moyens d'injection, dans laquelle les moyens formant contenant (10, 14, 15) sont mis en communication avec la machine de traitement (16) par l'intermédiaire d'un premier et un deuxième moyens de dosage pondéral (19, 22) respectifs servant à introduire des quantités dosées pré-établies des matières respectives dans cette machine, ainsi qu'avec les moyens d'injection (25), en étant également en communication, à partir de ces derniers, avec lesdits moyens formant contenant (14) par l'intermédiaire d'un troisième moyen de dosage pondéral (24), ainsi qu'avec les moules (27), les premier et deuxième moyens de dosage pondéral (19,22) étant prévus respectivement en un premier et un deuxième emplacements de chargement (17, 18) de la machine de traitement (16), correspondant à des températures de chauffage plus basse et plus élevée de celle-ci, et les moules (27) étant de préférence réalisés sous forme d'une table tournante (28), servant à transférer les produits formés dans les moules (27) d'une manière successive à travers des moyens de refroidissement (31) à la température du produit formé.

13. Installation suivant la revendication 12, comprenant des moyens d'injection supplémentaires (37) servant à introduire la matière plastique supplémentaire dans les moules (27), dans laquelle les moyens d'injection supplémentaires sont en communication avec des moyens formant contenant supplémentaires (35) contenant la matière plastique supplémentaire.

14. Installation suivant la revendication 13, dans laquelle les moules (27) comprennent un premier et un second moules, respectivement prévus pour former une cuve ou un récipient (43) et un contrepoids de lestage (34), dans laquelle la matière plastique supplémentaire fondue est introduite à l'avance dans le premier moule, pour former la cuve ou le récipient (43), avec un refroidissement suivant de celle-ci ou celui-ci, et, dans le second moule, il est introduit d'abord la cuve ou le récipient (43), extrait du premier moule, puis le mélange du produit composé fondu et des matières résiduelles pour former le contrepoids de lestage (34), lequel est ensuite refroidi.

15. Installation suivant la revendication 13, caractérisé en ce que les moules (27) comprennent un moule unique, pour former simultanément à la fois la cuve ou le récipient (43) et le contrepoids de lestage (34), le moule unique étant réalisé avec une taille et une forme permettant une répartition différente, dans celui-ci, de la matière plastique supplémentaire fondue et dudit mélange, lesquels y sont introduits simultanéments, d'une manière telle que la matière plastique supplémentaire se répartit vers la surface extérieure du produit, définissant ainsi la paroi extérieure (44) de la cuve ou du récipient, et ledit mélange se répartit vers la surface intérieure du produit, définissant ainsi la paroi intérieure (45) de la cuve ou du récipient (43) servant de contrepoids de lestage.

16. Produit obtenu au moyen du procédé et de l'installation conformes aux revendications 1 - 15, qui est un contrepoids (34) pour une cuve de lave-linge, ou un panneau d'isolation acoustique, formé par un mélange de matières résiduelles récupérées broyées ou écrasées ayant un poids spécifique élevé, de matières plastiques de revêtement et de matières de liaison, dans lequel les matières résiduelles sont comprises dans un produit composé formé des matières de revêtement et des matières de liaison et dans lequel les matières de revêtement sont réparties en outre d'une manière presque prédominante sur la surface extérieure du mélange matières résiduelles-produit composite de matières de revêtement et de matières de liaison.

17. Produit obtenu au moyen du procédé et de l'installation et conforme à la revendication 16, qui est une cuve de lavage (43) pour lave-linge, d'un seul bloc avec le contrepoids (34) et formée soit par une matière plastique supplémentaire utilisée pour fabriquer la cuve (43), sur laquelle ledit mélange est moulé par injection, soit par ledit mélange revêtu de la matière plastique supplémentaire.
